(19) **Europäisches Patentamt**

**European Patent Office**

**Office européen des brevets**

(11) **EP 0 686 111 B1**

(12) **FASCICULE DE BREVET EUROPEEN**

(45) Date de publication et mention
de la délivrance du brevet:
**15.04.1998 Bulletin 1998/16**

(21) Numéro de dépôt: **94908225.9**

(22) Date de dépôt: **01.03.1994**

(51) Int. Cl.$^6$: **B62D 5/00**, B62D 9/00,
B62D 6/00, B60K 7/00,
B60K 17/30

(86) Numéro de dépôt international:
**PCT/CA94/00110**

(87) Numéro de publication internationale:
**WO 94/20353 (15.09.1994 Gazette 1994/21)**

(54) **SERVODIRECTION**

SERVOLENKUNG

POWER STEERING SYSTEM

(84) Etats contractants désignés:
**AT BE CH DE DK ES FR GB GR IE IT LI LU MC NL
PT SE**

(30) Priorité: **01.03.1993 US 25419**

(43) Date de publication de la demande:
**13.12.1995 Bulletin 1995/50**

(73) Titulaire: **HYDRO-QUEBEC
Montréal Québec H2Z 1A4 (CA)**

(72) Inventeurs:
• **SIMARD, Julien
Brossard, Québec J4X 1C4 (CA)**
• **COUTURE, Pierre
Boucherville, Québec J4B 4A4 (CA)**

(74) Mandataire: **Nony, Michel
NONY & ASSOCIES
29, rue Cambacérès
75008 Paris (FR)**

(56) Documents cités:
EP-A- 0 292 567        WO-A-93/08063
WO-A-93/10735        FR-A- 1 130 755
FR-A- 2 549 433        GB-A- 2 259 063
US-A- 3 154 164        US-A- 4 753 308
US-A- 5 058 016        US-A- 5 161 813

• JÖRNSEN REIMPELL 'Fahrwerktechnik:
Lenkung' 1984 , VOGEL VERLAG , WüRZBURG
BRD voir page 50 - page 52; figures 2.6.2-2.6.4
• PATENT ABSTRACTS OF JAPAN vol. 9, no. 242
(M-417) (1965) 28 Septembre 1985 & JP,A,60 094
871 (KATSUJI IWATANI) 28 Mai 1985
• PATENT ABSTRACTS OF JAPAN vol. 12, no. 57
(M-670) 20 Février 1988 & JP,A,62 205 824 (FUJI)
10 Septembre 1987
• PATENT ABSTRACTS OF JAPAN vol. 12, no. 27
(M-662) 27 Janvier 1988 & JP,A,62 181 918 (FUJI)
10 Août 1987
• PATENT ABSTRACTS OF JAPAN vol. 10, no. 62
(M-460) (2119) 12 Mars 1986 & JP,A,60 206 785
(TOYODA) 18 Octobre 1985
• PATENT ABSTRACTS OF JAPAN vol. 10, no. 26
(P-425) 31 Janvier 1986 & JP,A,60 176 113
(MEIDENSHA) 10 Septembre 1985

**Description**

La présente invention concerne une servodirection utilisée dans un véhicule terrestre dont les roues directionnelles sont motrices de façon indépendante.

On connaît dans l'art trois principaux types de direction utilisés dans les véhicules pour modifier l'orientation des roues directionnelles d'un véhicule.

Le premier type de direction est celui où la force provient exclusivement de la force musculaire du conducteur. Ce type de direction n'est généralement utilisé que sur les petits véhicules puisque le couple que le conducteur doit exercer pour manoeuvrer les gros véhicules est souvent trop grand pour la plupart des personnes, notamment lorsque le véhicule est arrêté ou s'il se déplace à basse vitesse. Habituellement, si la force d'asservissement au volant excède 250 N, ce type de direction ne peut être utilisé et l'utilisation d'une aide supplémentaire devient nécessaire.

Le second type de direction est celui où la force provient exclusivement d'une source d'énergie du véhicule. Ce type de direction n'est toutefois pas adéquat pour des véhicules pouvant circuler à haute vitesse, comme par exemple les automobiles, mais on le retrouve souvent sur la machinerie lourde.

Le troisième type de direction est la servodirection où la force est produite à la fois par la force musculaire du conducteur et par une source d'énergie. La servodirection est couramment utilisée dans les véhicules pouvant circuler à haute vitesse, comme par exemple les automobiles.

De façon générale, une servodirection comprend une pompe entraînée par le moteur du véhicule, un réservoir d'huile, les boyaux et les conduits correspondants, une valve de contrôle et un vérin. Le vérin transforme la pression d'huile en une force d'asservissement agissant sur la direction pour intensifier le couple produit par le conducteur.

Parmi les inconvénients des servodirections, il y a le fait qu'elles nécessitent de nombreuses pièces qui augmentent le poids et le coût du véhicule. Elles requièrent également beaucoup d'énergie du moteur pour entraîner la pompe, ce qui n'est pas acceptable si la consommation d'énergie du véhicule est un facteur critique, comme par exemple pour un véhicule électrique où le rendement énergétique doit être aussi élevé que possible afin d'obtenir une autonomie intéressante.

Parmi les autres types de direction, on retrouve celle du brevet américain no. 5 058 016, dans lequel il est décrit un véhicule électrique équipé d'un ordinateur où toutes les performances du véhicule sont faites par un contrôle de la vitesse de rotation relative et de l'orientation de chacune des roues motrices, éliminant ainsi tout moyen mécanique habituellement utilisé à cette fin. Ce document constitue l'état de la technique le plus proche. Une variation de l'orientation des roues survient lorsqu'une différence dans la vitesse de rotation est imposée à une paire de roues motrices et opposées. Toutefois, il est très difficile de contrôler un tel véhicule.

Le brevet américain no. 4 753 308 décrit une servodirection avec un capteur de couple, un boîtier de direction et un moyen de contrôle d'asservissement dépendant du signal d'un capteur de couple.

Le document EP-A-292 567 décrit une servodirection des roues arrières d'un véhicule électrique. Cette servodirection comprend un embrayage électro-magnétique et un mécanisme d'asservissement de la biellette arrière. Des moyens de détection sont utilisés pour déterminer la position du volant et de la biellette arrière.

Des exemples additionnels de direction connus dans l'art antérieur sont décrits dans les brevets américains nos. RE 11 780, 2 571 180, 3 154 164, 3 756 335, 4 196 785, 4 905 783 et 4 926 960.

L'objet de la présente invention est de proposer une servodirection pour véhicule terrestre, ayant au moins deux roues motrices directionnelles et indépendantes, dans laquelle un asservissement est engendré par la création d'un couple différentiel dans des moteurs afin de produire des forces d'asservissement aidant le conducteur à orienter les roues directionnelles.

Plus particulièrement, l'objet de la présente invention est de proposer une servodirection pour véhicule terrestre, la servodirection comprenant:

un volant de direction;
une biellette;
deux roues reliées au véhicule, chacune des roues pouvant être orientée autour d'un axe d'orientation et possédant un centre de traction latéralement désaxé par rapport au point d'intersection d'une prolongation virtuelle de l'axe d'orientation avec le sol, un bras de levier virtuel étant défini entre chacun des centres de traction et de leur point d'intersection correspondant de leur axe d'orientation avec le sol;
une timonerie reliant mécaniquement la biellette aux roues, la biellette assurant que les roues soient continuellement et substantiellement parallèles entre elles;
deux moteurs mécaniquement indépendants et respectivement reliés à l'une des deux roues; et
un moyen de contrôle dont les signaux de sortie assurent la commande des moteurs;
un asservissement étant produit en générant une différence d'entraînement entre les moteurs et produisant ainsi un asservissement à cause des bras de levier;
la servodirection étant caractérisée en ce qu'elle comprend:
un boîtier de direction;
un arbre de direction reliant mécaniquement le volant à la biellette par l'intermédiaire du boîtier afin de produire un mouvement substantiellement latéral de la biellette;
un premier moyen de détection pour obtenir un premier signal représentatif du couple appliqué sur le volant et son sens; et

un moyen de contrôle dépendant du premier signal pour produire deux signaux de sortie représentatifs de la différence de couple à être générée par les moteurs;

un asservissement étant produit, lorsqu'un couple est appliqué sur le volant, en générant le couple différentiel par les moteurs et produisant ainsi des forces d'asservissement à cause des bras de levier.

La présente invention a également pour objet de proposer une servodirection pour véhicule terrestre lent, la servodirection comprenant:

un volant de direction;
une biellette;
deux roues reliées au véhicule, chacune des roues pouvant être orientée autour d'un axe d'orientation et possédant un centre de traction latéralement désaxé par rapport au point d'intersection d'une prolongation virtuelle de l'axe d'orientation avec le sol, un bras de levier virtuel étant défini entre chacun des centres de traction et de leur point d'intersection correspondant de leur axe d'orientation avec le sol;
une timonerie reliant mécaniquement la biellette aux roues, la biellette assurant que les roues soient continuellement et substantiellement parallèles entre elles;
deux moteurs mécaniquement indépendants et respectivement reliés à l'une des deux roues; et
un moyen de contrôle dont les signaux de sortie assurent la commande des moteurs;
un asservissement étant produit en générant une différence d'entraînement entre les moteurs et produisant ainsi un asservissement à cause des bras de levier;
la servodirection étant caractérisée en ce qu'elle comprend:
un premier moyen de détection pour obtenir un premier signal représentatif de la position du volant;
un deuxième moyen de détection pour obtenir un deuxième signal représentatif de la position de la biellette; et
un moyen de contrôle dépendant du premier et du deuxième signal pour produire deux signaux de sortie représentatifs de la différence de couple à être générée par les moteurs;
un asservissement étant produit en générant le couple différentiel par les moteurs et produisant ainsi des forces d'asservissement à cause des bras de levier.

La présente invention a également pour objet de proposer une méthode pour produire un asservissement de servodirection pour un véhicule terrestre, le véhicule comprenant:

un volant de direction;
une biellette;
un boîtier de direction;
un arbre de direction reliant mécaniquement le volant au boîtier afin de produire un mouvement substantiellement latéral de la biellette;
deux roues reliées au véhicule, chacune des roues pouvant être orientée autour d'un axe d'orientation et possédant un centre de traction latéralement désaxé par rapport au point d'intersection d'une prolongation virtuelle de l'axe d'orientation avec le sol, un bras de levier virtuel étant défini entre chacun des centres de traction et de leur point d'intersection correspondant de leur axe d'orientation avec le sol;
une timonerie reliant mécaniquement la biellette aux roues, la biellette assurant que les roues soient continuellement et substantiellement parallèles entre elles;
deux moteurs mécaniquement indépendants et respectivement reliés aux deux roues; et
un moyen de contrôle dont les signaux de sortie assurent la commande des moteurs;
un asservissement étant produit en générant une différence d'entraînement entre les moteurs et produisant ainsi des forces d'asservissement à cause des bras de levier;
la méthode étant caractérisée en ce qu'elle comprend les étapes suivantes:
obtenir un premier signal représentatif du couple appliqué sur le volant et son sens; et
produire deux signaux de sortie dépendant du premier signal et représentatifs de la différence de couple à être générée par les moteurs;
un asservissement étant produit, lorsqu'un couple est appliqué sur le volant, en générant le couple différentiel par les moteurs et produisant ainsi des forces d'asservissement à cause des bras de levier.

La présente invention a également pour objet de proposer une méthode pour produire un asservissement de servodirection pour un véhicule terrestre, le véhicule comprenant:

un volant de direction;
une biellette de direction;
deux roues reliées au véhicule, chacune des roues pouvant être orientée autour d'un axe d'orientation et possédant un centre de traction latéralement désaxé par rapport au point d'intersection d'une prolongation virtuelle de l'axe d'orientation avec le sol, un bras de levier virtuel étant défini entre chacun des centres de traction et de leur point d'intersection correspondant de l'axe d'orientation avec le sol;
une timonerie reliant mécaniquement la biellette aux roues, la biellette assurant que les roues soient continuellement et substantiellement parallèles entre elles;

deux moteurs mécaniquement indépendants et respectivement reliés à l'une des deux roues; et

un moyen de contrôle dont les signaux de sortie assurent la commande des moteurs;

un asservissement étant produit en générant une différence d'entraînement entre les moteurs et produisant ainsi des forces d'asservissement à cause des bras de levier; la méthode étant caractérisée en ce qu'elle comprend les étapes suivantes:

obtenir un premier signal représentatif de la position du volant;

obtenir un deuxième signal représentatif de la position de la biellette; et

produire deux signaux de sortie dépendant du premier et du deuxième signal, et représentatifs de la différence de couple à être générée par les moteurs;

un asservissement étant produit en générant le couple différentiel par les moteurs et produisant ainsi des forces d'asservissement à cause des bras de levier.

La présente invention s'applique substantiellement à n'importe quel type de véhicule terrestre dont les roues directionnelles sont motrices de façon indépendante.

L'invention sera mieux comprise à la lecture non limitative qui suit d'un mode de réalisation préféré de l'invention faite en se référant aux dessins annexés décrits ci-après dans lesquels:

la figure 1 est une vue en perspective d'un schéma bloc montrant un premier mode de réalisation de la servodirection selon la présente invention;

la figure 2 est une vue en perspective d'un schéma bloc montrant un deuxième mode de réalisation de la servodirection selon la présente invention;

la figure 3 est une vue en perspective d'un schéma bloc montrant un troisième mode de réalisation de la servodirection selon la présente invention;

la figure 4 est une vue en coupe d'un moteur-roue et du levier de fusée correspondant, lesquels sont représentés schématiquement aux figures 2 et 3;

la figure 5 est une vue en coupe d'un moyen de verrouillage, lequel est représenté schématiquement à la figure 3;

la figure 6 est un schéma bloc montrant le fonctionnement d'un mode de réalisation de la présente invention;

la figure 7 est un graphique du facteur de proportionnalité d'un amplificateur, montré à la figure 6, en fonction de la vitesse du véhicule; et

la figure 8 est un algorithme montrant les principales étapes de la méthode selon la présente invention.

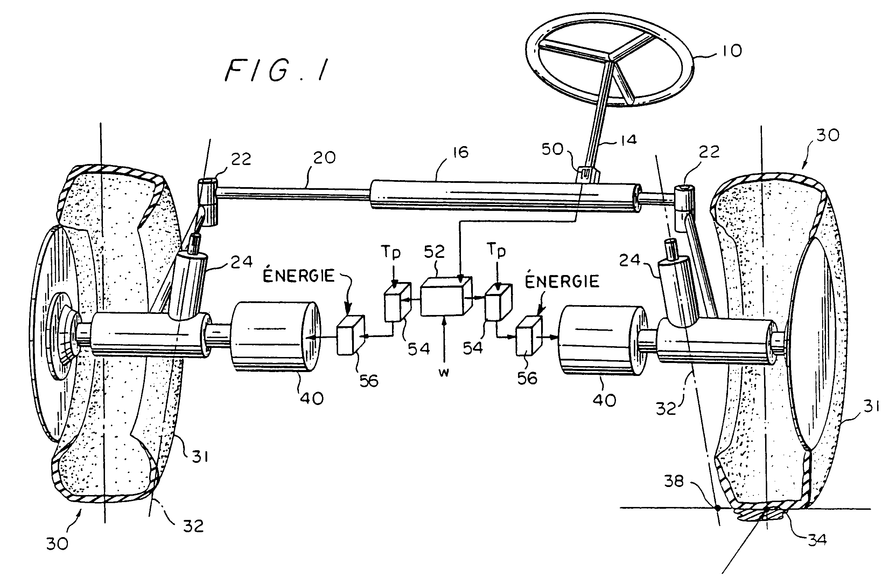

La servodirection selon la présente invention, telle que représentée à la figure 1, comprend un volant de direction 10 mécaniquement relié au boîtier de direction 16 par le biais d'un arbre de direction 14 (également appelé *colonne de direction* dans certaines références). Le volant 10, l'arbre 14 et le boîtier 16 sont conventionnels. Bien que soit représenté le boîtier 16 comme étant du type pignon et crémaillère, tout autre type de boîtier de direction, tel que la direction à vis et galet ou à circulation de billes, peut être utilisé.

Le boitier 16 actionne la biellette 20 afin de produire un mouvement substantiellement latéral de cette dernière suite à la rotation du volant 10 par le conducteur.

La biellette 20 est mécaniquement reliée aux deux roues directionnelles 30, avant ou arrière, par une timonerie de direction. Chacune des roues 30 est reliée en rotation au véhicule et est orientable autour d'un axe d'orientation 32. La timonerie comprend en outre des parties conventionnelles telles que des embouts de biellette 22, des leviers de fusée 24, etc. La biellette 20 garde notamment les roues 30 constamment et substantiellement parallèles entre elles.

Chaque roue 30 est en contact avec le sol et comprend un centre de traction 34, lequel est un point de contact central moyen virtuel. Puisque les roues 30 comprennent des pneus de caoutchouc 31 et que le contact entre les pneus 31 et le sol est plus une surface qu'un contact ponctuel, l'utilisation du concept de centre de traction est avantageuse puisqu'elle permet de localiser le point où la force de traction entre le sol et le pneu 31 est exercée.

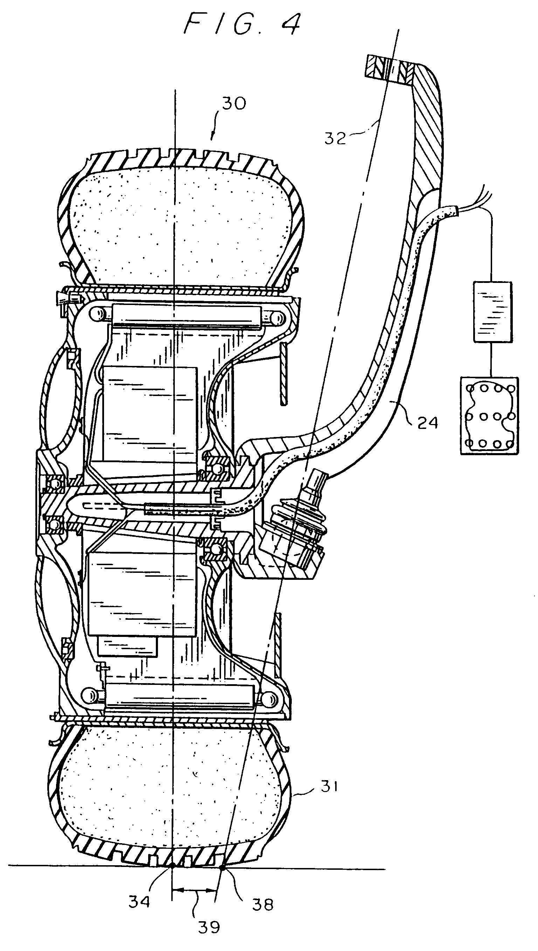

Le centre de traction 34 doit être latéralement désaxé avec le point d'intersection 38 d'une prolongation virtuelle de l'axe d'orientation 32 avec le sol de façon à définir un bras de levier virtuel 39 entre le centre de traction 34 et le point d'intersection correspondant 38, tel que représenté à la figure 4.

Puisque chaque roue 30 est reliée à un moteur 40, lequel est mécaniquement indépendant de l'autre, des couples inégaux peuvent être exercés sur chaque roue 30 de façon à créer un couple différentiel. Le couple différentiel va ainsi résulter en des forces de traction inégales exercées au niveau des roues 30, plus particulièrement au niveau des centres de traction 34 correspondants, forçant ainsi les roues 30 à pivoter autour de leur axe d'orientation 32 à cause de l'effet combiné des forces des bras de levier 39. Si ces bras de levier 39 n'étaient pas présents, il n'y aurait substantiellement pas de pivotement lorsqu'un couple différentiel serait exerce.

Lors de l'utilisation, le conducteur qui désire effectuer un virage exerce un couple sur le volant 10. Le couple est alors transmis à l'arbre 14 et ensuite au boîtier 16, lequel est, tel que mentionné précédemment, relié mécaniquement à la biellette 20.

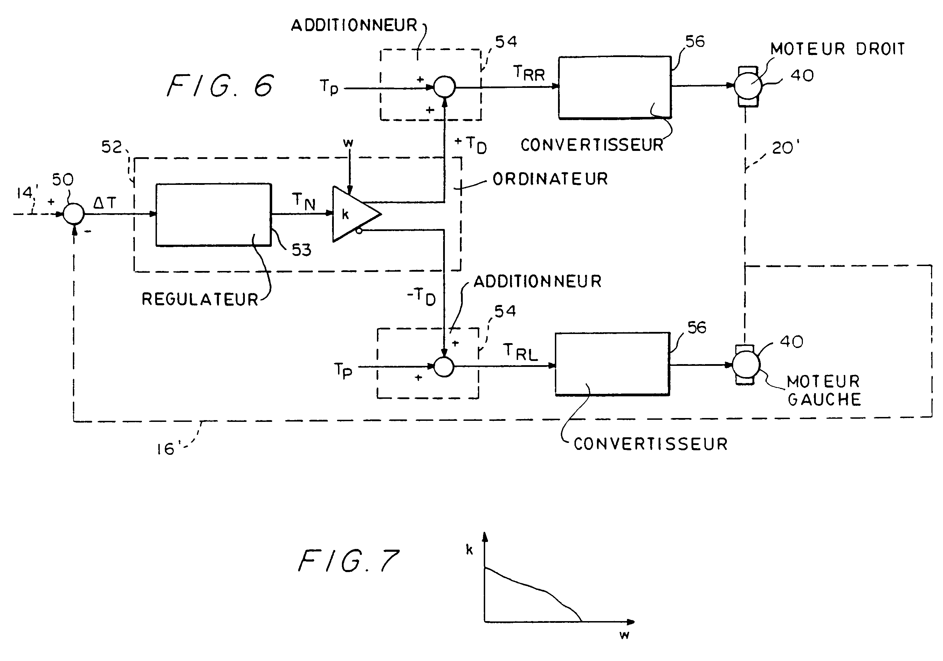

Le couple est mesuré par un moyen de détection approprié, tel qu'une jauge de contraintes 50, afin d'obtenir un signal $\Delta T$ représentatif de son intensité et de son sens. Tel que représenté à la figure 6, le signal ΔT est envoyé à un moyen de contrôle, comme par exemple un ordinateur 52, afin de produire deux signaux de sortie représentatifs du couple différentiel $\Delta T_{DIFF}$ devant être produit par les moteurs 40. Préférablement, le couple différentiel $\Delta T_{DIFF}$ est également divisé entre les deux moteurs 40 et les signaux peuvent être représentés par:

$$T_D = \Delta T_{DIFF}/2$$

où $T_D$ est le signal envoyé à chaque moteur 40. L'un des signaux est $+T_D$ et l'autre est $-T_D$.

Les signaux $T_D$ sont additionnés au signal du couple d'entraînement $T_P$ qui est choisi par le conducteur à l'aide de la pédale d'accélérateur. Par exemple, si le véhicule est arrêté, le couple différentiel fera tourner l'un des moteurs 40 dans un sens et l'autre dans le sens opposé. Lorsque le véhicule avance à une vitesse plus grande, les couples produits par chaque moteur 40 peuvent être exercés dans le même sens mais à des niveau différents.

Les signaux $T_D$ et $T_P$ de chaque roue 30 sont additionnés dans un additionneur 54. Puisqu'il y a une roue droite et une roue gauche, les signaux résultants sont respectivement $T_{RR}$ et $T_{RL}$. Chacun de ces signaux est envoyé à un convertisseur 56 correspondant qui est relié à une source d'énergie fournissant de l'énergie au moteur correspondant 40. Cette énergie peut être sous la forme d'électricité, d'huile hydraulique pressurisée, d'air sous pression ou même d'un mouvement mécanique lorsque contrôlé par un convertisseur approprié. Un asservissement dans la servodirection sera alors créé à cause du couple différentiel $\Delta T_{DIFF}$ et des bras de levier virtuels 39 qui, ensemble, produisent les forces d'asservissement aidant le conducteur, et ce, en sus de la force musculaire de ce dernier.

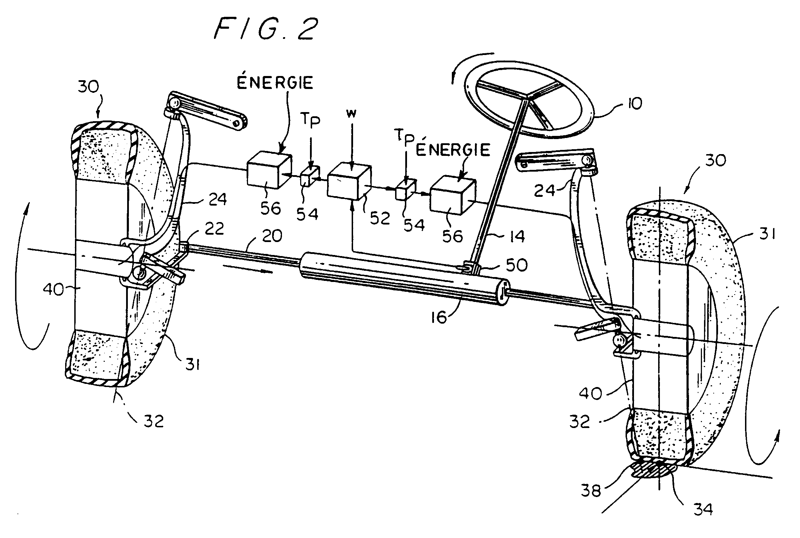

À la figure 6, les lignes pointillées identifiées 14', 16' et 20' font référence respectivement à l'arbre 14, au boîtier 16 et à la biellette 20 représentés aux figures 1 et 2, représentant ainsi les liens mécaniques entre les divers éléments. La ligne 14' comprend un signe "+" tandis que la ligne 16' comprend un signe "-" afin de représenter le fait que le couple $\Delta T$ est seulement présent s'il y a un couple égal et opposé créé, par exemple, par l'inertie, la friction et les forces gyroscopiques. Bien sûr, la jauge de contrainte 50 peut être localisée ailleurs sur la servodirection qu'à l'endroit où elle est située dans les dessins.

Tel qu'illustré aux figures 1, 2 et 6, lorsque les roues 30 sont tournées de façon adéquate, le conducteur cesse d'appliquer un couple sur le volant 10. La jauge de contrainte 50 ne mesurera alors plus de couple, indiquant ainsi à l'ordinateur 52 de cesser de créer les signaux $T_D$ produisant le couple différentiel et de là les forces d'asservissement.

L'ordinateur 52 peut comprendre un régulateur 53 pour filtrer et stabiliser le signal $\Delta T$. Le régulateur produit un signal $T_N$.

De plus, au lieu de simplement amplifier et diviser le signal $T_N$ en deux signaux de signes opposés, la servodirection peut comprendre en plus des moyens de détection, comme par exemple un indicateur de vitesse conventionnel (non représenté), afin d'obtenir un signal ω représentatif de la vitesse de déplacement du véhicule. Ceci permet à l'ordinateur 52 de prendre en considération la vitesse du véhicule et de produire un signal $T_D$ de couple différentiel qui est pondéré en fonction de la vitesse du véhicule. Ceci se fait en multipliant le signal $T_N$ par un facteur de proportionnalité programmé dans la mémoire de l'ordinateur 52.

La figure 7 illustre un exemple de courbe du facteur de proportionnalité k en fonction de la vitesse du véhicule ω. L'utilisation d'un facteur de proportionnalité permet au conducteur de mieux percevoir la "sensation" de virage. Tel qu'on peut le remarquer, le facteur de proportionnalité, maximal lorsque le véhicule est arrêté, diminue lorsque le véhicule accélère. Ceci est avantageux puisque la force nécessaire pour faire tourner les roues 30 du véhicule est plus grande à l'arrêt qu'à grande vitesse. Bien sûr, il est possible de choisir un tout autre facteur de proportionnalité ayant une courbe complètement différente.

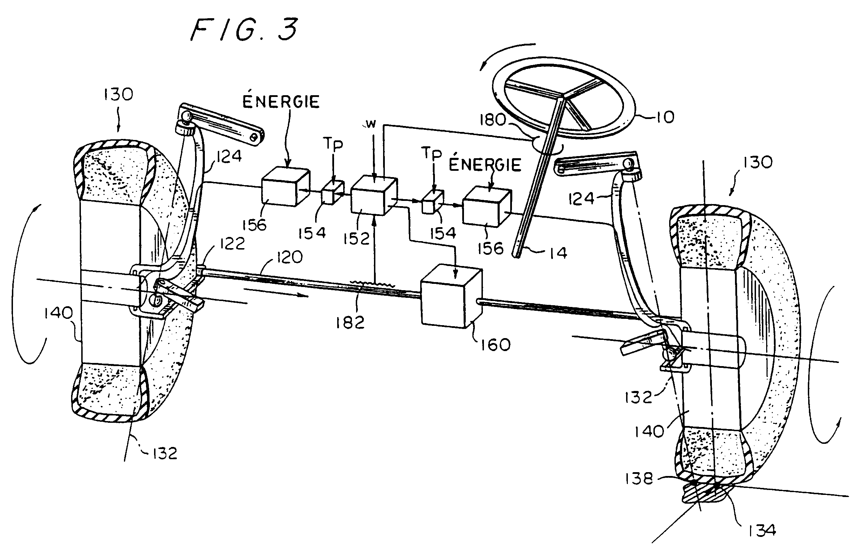

Tel qu'illustré à la figure 3, il est possible de diriger deux roues additionnelles opposées aux deux roues 30. Par exemple, il est possible de diriger les roues arrière d'un véhicule à quatre roues, notamment une automobile, si les roues 30 sont des roues avant, et vice versa. Ceci est particulièrement avantageux pour stationner un véhicule.

À l'instar des roues 30, les deux roues additionnelles, appelées ci-après "roues 130", sont reliées en rotation au véhicule par les leviers de fusée 124, sont orientables autour de l'axe d'orientation 132 et ont un centre de traction 134 latéralement désaxé du point d'intersection 138 de la prolongation virtuelle de l'axe d'orientation 132 correspondant avec le sol. Le bras de levier virtuel est alors défini entre chaque centre de traction 134 et le point d'intersection 138 correspondant.

La servodirection additionnelle comprend également une biellette 120, une timonerie de direction reliant mécaniquement la biellette 120 aux roues 130, deux moteurs 140 mécaniquement indépendants entre eux et respectivement connectés à l'une des deux roues 130. La timonerie comprend des embouts de biellette 122, des leviers de fusée 124, etc.

Un moyen de détection, comme par exemple une jauge de positionnement 180, est présent afin de produire un signal θ représentatif de la position du volant 10. La jauge de positionnement 180 est préférablement installée sur l'arbre 14. Un autre moyen de détection, comme par exemple une jauge de positionnement 182, est également présent afin de produire un signal ε représentatif de la position de la biellette 120. Les signaux θ et ε sont envoyés à l'ordinateur 152, lequel peut être l'ordinateur 52 si ce dernier est capable de prendre en charge les opérations des roues 30 et 130.

L'ordinateur 152 va alors produire deux signaux de sortie $+T_D'$ et $-T_D'$ représentatifs du couple différentiel à être produit par les moteurs 140. Un asservissement sera alors produit au niveau des roues 130 en créant un couple différentiel par les moteurs 140, produisant ainsi les forces d'asservissement causées par les bras de levier.

Bien que la servodirection additionnelle n'ait pas de lien mécanique direct avec le volant 10, tous ses éléments sont substantiellement identiques à ceux de la servodirection décrite précédemment. L'ordinateur 152 est similaire à l'ordinateur 52. Les additionneurs 154 sont similaires aux additionneurs 54 et produisent des signaux $T_{RR}'$ et $T_{RL}'$ destinés à être transmis aux convertisseurs 156, eux-mêmes similaires aux convertisseurs 56. Les convertisseurs 156 transmettent aux moteurs 140 l'énergie provenant de la source énergétique.

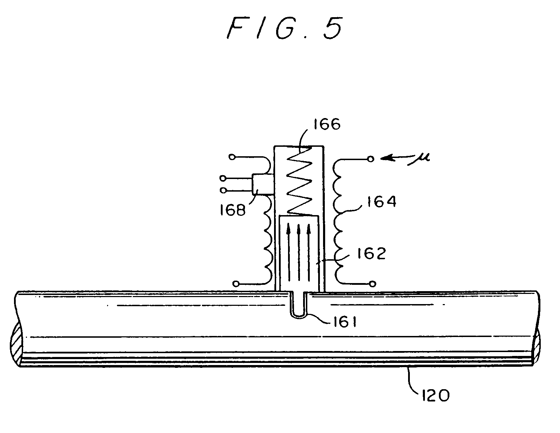

Telle que représentée aux figures 3 et 5, la servodirection additionnelle peut comprendre en plus un moyen de verrouillage 160, comprenant en outre un pêne 162 pouvant se déplacer entre une première position où la biellette 120 est maintenue dans une position substantiellement centrale, et une deuxième position où le pêne 162 ne gêne pas le mouvement de la biellette 120. Le pêne 162 est contrôlé par l'ordinateur 152 par le biais d'un signal de contrôle approprié.

Tel que représenté à la figure 5, le moyen de verrouillage 160 comprend un solénoïde 164 agissant sur le pêne 162 afin de le retirer du trou 161, pratiqué dans la biellette 120, en opposition à la force gravitationnelle et celle du ressort 166. Un détecteur de position 168 peut également être installé afin de s'assurer que le pêne 162 est en place lorsque la servodirection additionnelle n'est plus nécessaire.

Afin de prédire précisément quand le pêne 162 doit être retiré du trou 161, l'ordinateur 152 peut être relié à un moyen de détection afin d'obtenir un signal $\omega$ représentatif de la vitesse du véhicule, permettant ainsi également l'utilisation d'un facteur de proportionnalité si désiré. Le signal $\omega$ permet ainsi à la servodirection additionnelle d'être déverrouillée lorsque la vitesse du véhicule est inférieure à une valeur prédéterminée, plus particulièrement si la vitesse du véhicule est assez lente pour permettre un déverrouillage sécuritaire du pêne 162.

Telle qu'illustrée aux figures 1, 2 et 3, la servodirection avec lien mécanique direct peut être utilisée avec des roues avant ou arrière. L'utilisation de cette servodirection avec des roues arrière est particulièrement avantageuse pour des véhicules lents, comme par exemple les véhicules industriels tels les monte-charges dans les entrepôts.

La présente invention est également bien adaptée pour l'utilisation de moteurs-roues, où les moteurs 40 et 140 sont respectivement intégrés aux roues 30 et 130.

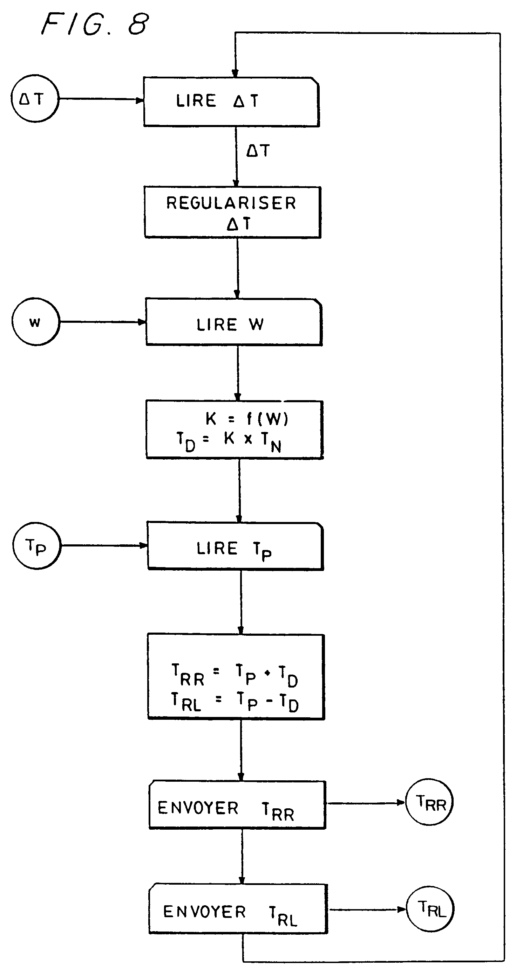

La présente invention permet aussi l'utilisation d'une méthode pour produire un asservissement de servodirection pour un véhicule terrestre utilisant un système substantiellement similaire à celui décrit précédemment. La figure 8 représente un exemple des étapes principales de la méthode.

Telle qu'illustrée aux figures 1, 2, 4 et 8, la méthode comprend les étapes suivantes:

obtenir un signal $\Delta T$ représentatif du couple appliqué sur le volant 10 et son sens; et
produire deux signaux de sortie dépendant du signal $\Delta T$ et représentatifs de la différence de couple à être générée par les moteurs 40.

Ceci permet de créer l'asservissement lorsqu'un couple est exercé sur le volant 10.

La présente méthode peut également comprendre l'étape supplémentaire consistant à obtenir un signal $\omega$ représentatif de la vitesse du véhicule, les deux signaux de sortie étant alors dépendants du signal $\omega$. Il est également possible d'ajouter une étape consistant en l'application du gain au signal $\Delta T$ avant la production des deux signaux de sortie, le gain étant une fonction du signal $\omega$.

De plus, une méthode selon la présente invention peut être utilisée dans le cadre de la servodirection illustrée à la figure 3, la méthode comprenant les étapes suivantes:

obtenir un premier signal $\theta$ représentatif de la position du volant 10;
obtenir un deuxième signal $\varepsilon$ représentatif de la position de la biellette 120; et
produire deux signaux de sortie $+T_D$ et $-T_D$ dépendant des signaux $\theta$ et $\varepsilon$, lesquels sont représentatifs de la différence de couple à être générée par les moteurs.

La méthode concernant la servodirection peut également comprendre l'étape de production d'un signal de sortie $\mu$ servant à contrôler le moyen de verrouillage 160. Il y a également l'étape d'obtention du signal $\omega$ représentatif de la vitesse du véhicule, le signal $\mu$ étant dépendant du signal $\omega$. Le moyen de verrouillage 160 est à la deuxième position lorsque la vitesse du véhicule est sous une valeur prédéterminée.

D'une manière similaire, une méthode selon la présente invention permet de diriger un véhicule terrestre lent. Une telle servodirection est représentée à la figure 3. La méthode comprend les étapes de:

obtenir un signal $\Delta T$ dépendant de la position du volant 10;
obtenir un signal $\varepsilon$ dépendant de la position de la biellette 120; et
produire deux signaux de sortie dépendant des signaux $\Delta T$ et $\varepsilon$, les deux signaux de sortie étant représentatifs du couple différentiel à être généré par les moteurs 140.

Bien que des modes de réalisation préférés de l'invention aient été précédemment décrits en détail et illustrés dans les dessins annexés, l'invention n'est pas limitée à ces seuls modes de réalisation et plusieurs changements et modifications peuvent y être effectués par une personne du métier sans sortir du cadre ou de l'esprit de l'invention.

## Revendications

1. Une servodirection pour véhicule terrestre, la servodirection comprenant:

   un volant de direction (10);
   une biellette (20);
   deux roues (30) reliées au véhicule, chacune des roues (30) pouvant être orientée autour d'un axe d'orientation (32) et possédant un centre de traction (34) latéralement désaxé par rapport au point d'intersection (38) d'une prolongation virtuelle de l'axe d'orientation (32) avec le sol, un bras de levier virtuel (39) étant défini entre chacun des centres de traction (34) et de leur point d'intersection correspondant (38) de leur axe d'orientation (32) avec le sol;
   une timonerie reliant mécaniquement la biellette (20) aux roues (30), la biellette (20) assurant que les roues (30) soient continuellement et substantiellement parallèles entre elles;
   deux moteurs (40) mécaniquement indépendants et respectivement reliés à l'une des deux roues; et
   un moyen de contrôle dont les signaux de sortie assurent la commande des moteurs (40);
   un asservissement étant produit en générant une différence d'entraînement entre les moteurs (40) et produisant ainsi un asservissement à cause des bras de levier (39);
   la servodirection étant caractérisée en ce qu'elle comprend:
   un boîtier de direction (16);
   un arbre de direction (14) reliant mécaniquement le volant (10) à la biellette (20) par l'intermédiaire du boîtier (16) afin de produire un mouvement substantiellement latéral de la biellette (20);
   un premier moyen de détection pour obtenir un premier signal (ΔT) représentatif du couple appliqué sur le volant (10) et son sens; et
   un moyen de contrôle dépendant du premier signal (ΔT) pour produire deux signaux de sortie (+$T_D$, -$T_D$) représentatifs de la différence de couple à être générée par les moteurs (40);
   un asservissement étant produit, lorsqu'un couple est appliqué sur le volant (10), en générant le couple différentiel par les moteurs (40) et produisant ainsi des forces d'asservissement à cause des bras de levier (39).

2. Une servodirection selon la revendication 1, caractérisée en ce qu'elle comprend également un deuxième moyen de détection pour obtenir un deuxième signal (ω) représentatif de la vitesse du véhicule, le moyen de contrôle étant dépendant en plus du deuxième signal (ω) afin de produire les deux signaux de sortie (+$T_D$, -$T_D$).

3. Une servodirection selon la revendication 1, caractérisée en ce qu'elle comprend également une servodirection additionnelle pour orienter deux roues additionnelles (130) opposées aux deux roues (30) de la servodirection, les deux roues additionnelles (130) étant reliées au véhicule, chacune d'elles étant orientable autour d'un axe d'orientation (132) et ayant un centre de traction (134) latéralement désaxé par rapport au point d'intersection (138) d'une prolongation virtuelle de leur axe d'orientation (132) avec le sol, un bras de levier virtuel (139) étant défini entre chacun des centres de traction (134) des roues additionnelles (130) et de leur point d'intersection correspondant (138) de leur axe d'orientation (132) avec le sol, la servodirection additionnelle comprenant:

   une biellette additionnelle (120);
   une timonerie additionnelle reliant mécaniquement la biellette additionnelle (120) aux roues additionnelles (130), la biellette additionnelle (120) assurant que les roues additionnelles (130) soient continuellement et substantiellement parallèles entre elles;
   deux moteurs additionnels (140) mécaniquement indépendants et respectivement reliés à l'une des deux roues additionnelles (130);
   un deuxième moyen de détection pour obtenir un deuxième signal (θ) représentatif de la position du volant (10);
   un troisième moyen de détection pour obtenir un troisième signal (ε) représentatif de la position de la biellette additionnelle (120); et
   un moyen de contrôle additionnel dépendant du deuxième (θ) et du troisième signal (ε) pour produire deux signaux de sortie additionnels (+$T_D$', -$T_D$') représentatifs de la différence de couple à être générée par les moteurs additionnels (140);
   un asservissement des roues additionnelles (130) étant produit en générant le couple différentiel par les moteurs additionnels (140) et produisant ainsi des forces d'asservissement de la biellette additionnelle (120) à cause des bras de levier (139) produits par les centres de traction (134) des roues additionnelles (130).

4. Une servodirection selon la revendication 3, caractérisée en ce qu'elle comprend également un moyen de verrouillage (160) comprenant une partie mobile pouvant être déplacée entre une première position où le moyen de verrouillage (160) maintient la biellette additionnelle (120) dans une position substantiellement centrale, et une deuxième position où le moyen de verrouillage (160) n'empêche pas le mouvement de la biellette additionnelle (120), le moyen de contrôle additionnel produisant un signal de sortie additionnel ($\mu$) pour contrôler le moyen de verrouillage (160).

5. Une servodirection selon la revendication 3, caractérisée en ce qu'elle comprend également un quatrième moyen de détection pour obtenir un quatrième signal ($\omega$) représentatif de la vitesse du véhicule, le moyen de contrôle additionnel étant également dépendant du quatrième signal ($\omega$) afin de produire le signal de sortie additionnel ($\mu$), le moyen de verrouillage (160) étant à la deuxième position lorsque la vitesse est inférieure à une valeur prédéterminée.

6. Une servodirection selon la revendication 4, caractérisée en ce que la partie mobile du moyen de verrouillage comprend un pêne (162) pouvant être inséré et retiré d'un trou (161) pratiqué dans la biellette additionnelle (120).

7. Une servodirection selon la revendication 1, caractérisée en ce que les roues (30) sont des roues avant.

8. Une servodirection selon la revendication 3, caractérisée en ce que les roues additionnelles (130) sont des roues arrière.

9. Une servodirection selon la revendication 1, caractérisée en ce que chacun des moteurs (40) avec leur roue correspondante (30) est un moteur-roue.

10. Une servodirection pour véhicule terrestre lent, la servodirection comprenant:

un volant de direction (10);
une biellette (120);
deux roues (130) reliées au véhicule, chacune des roues (130) pouvant être orientée autour d'un axe d'orientation (132) et possédant un centre de traction (134) latéralement désaxé par rapport au point d'intersection (138) d'une prolongation virtuelle de l'axe d'orientation (132) avec le sol, un bras de levier virtuel (139) étant défini entre chacun des centres de traction (134) et de leur point d'intersection correspondant (138) de leur axe d'orientation (132) avec le sol;
une timonerie reliant mécaniquement la biellette (120) aux roues (130), la biellette (120) assurant que les roues (130) soient continuellement et substantiellement parallèles entre elles;
deux moteurs (140) mécaniquement indépendants et respectivement reliés à l'une des deux roues (130); et
un moyen de contrôle dont les signaux de sortie assurent la commande des moteurs (140);
un asservissement étant produit en générant une différence d'entraînement entre les moteurs (140) et produisant ainsi un asservissement à cause des bras de levier (139);
la servodirection étant caractérisée en ce qu'elle comprend:
un premier moyen de détection pour obtenir un premier signal ($\theta$) représentatif de la position du volant (10);
un deuxième moyen de détection pour obtenir un deuxième signal ($\varepsilon$) représentatif de la position de la biellette (120); et
un moyen de contrôle dépendant du premier ($\theta$) et du deuxième signal ($\varepsilon$) pour produire deux signaux de sortie ($+T_D'$, $-T_D'$) représentatifs de la différence de couple à être générée par les moteurs (140);
un asservissement étant produit en générant le couple différentiel par les moteurs (140) et produisant ainsi des forces d'asservissement à cause des bras de levier (139).

11. Une méthode pour produire un asservissement de servodirection pour un véhicule terrestre, le véhicule comprenant:

un volant de direction (10);
une biellette (20);
un boîtier de direction (16);
un arbre de direction (14) reliant mécaniquement le volant (10) au boîtier (16) afin de produire un mouvement substantiellement latéral de la biellette (20);
deux roues (30) reliées au véhicule, chacune des roues pouvant être orientée autour d'un axe d'orientation (32) et possédant un centre de traction (34) latéralement désaxé par rapport au point d'intersection (38) d'une prolongation virtuelle de l'axe d'orientation (32) avec le sol, un bras de levier virtuel (39) étant défini entre chacun des centres de traction (34) et de leur point d'intersection correspondant (38) de leur axe d'orientation (32) avec le sol;
une timonerie reliant mécaniquement la biellette (20) aux roues (30), la biellette (20) assurant que les roues (30) soient continuellement et substantiellement parallèles entre elles;
deux moteurs (40) mécaniquement indépendants et respectivement reliés aux deux roues (30); et
un moyen de contrôle dont les signaux de sortie assurent la commande des moteurs (40);

un asservissement étant produit en générant une différence d'entraînement entre les moteurs (40) et produisant ainsi des forces d'asservissement à cause des bras de levier (39);

la méthode étant caractérisée en ce qu'elle comprend les étapes suivantes:

obtenir un premier signal ($\Delta T$) représentatif du couple appliqué sur le volant (10) et son sens; et

produire deux signaux de sortie ($+T_D$, $-T_D$) dépendant du premier signal ($\Delta T$) et représentatifs de la différence de couple à être générée par les moteurs (40);

un asservissement étant produit, lorsqu'un couple est appliqué sur le volant (10), en générant le couple différentiel par les moteurs (40) et produisant ainsi des forces d'asservissement à cause des bras de levier (39).

12. Une méthode selon la revendication 11, caractérisée en ce qu'elle comprend également l'étape d'obtenir un deuxième signal ($\omega$) représentatif de la vitesse du véhicule, les deux signaux de sortie ($+T_D$, $-T_D$) étant dépendants en plus du deuxième signal ($\omega$).

13. Une méthode selon la revendication 12, caractérisée en ce qu'elle comprend également l'étape d'appliquer un gain (k) au premier signal ($\Delta T$) avant la production des deux signaux de sortie ($+T_D$, $-T_D$), le gain (k) étant une fonction du deuxième signal ($\omega$).

14. Une méthode selon la revendication 11, caractérisée en ce que le véhicule comprend également deux roues additionnelles (130) opposées aux deux roues (30) de la servodirection, les deux roues additionnelles (130) étant reliées au véhicule, chacune d'elles étant orientable autour d'un axe d'orientation (132) et ayant un centre de traction (134) latéralement désaxé par rapport au point d'intersection (138) d'une prolongation virtuelle de leur axe d'orientation (132) sur le sol, un bras de levier virtuel (139) étant défini entre chacun des centres de traction (134) et de leur point d'intersection correspondant (138) de leur axe d'orientation (132) avec le sol, la servodirection additionnelle comprenant:

une biellette additionnelle (120);
une timonerie additionnelle reliant mécaniquement la biellette additionnelle (120) aux roues additionnelles (130), la biellette additionnelle (120) assurant que les roues additionnelles (130) soient continuellement et substantiellement parallèles entre elles;

deux moteurs additionnels (140) mécaniquement indépendants et respectivement reliés aux deux roues additionnelles (130);

la méthode comprenant les étapes suivantes:

obtenir un deuxième signal ($\theta$) représentatif de la position du volant (10);
obtenir un troisième signal ($\varepsilon$) représentatif de la position de la biellette additionnelle (120); et produire deux signaux de sortie additionnels ($+T_D'$, $-T_D'$) dépendant du deuxième ($\theta$) et du troisième ($\varepsilon$) signal, et représentatifs de la différence de couple à être générée par les moteurs additionnels (140);
un asservissement des roues additionnelles (130) étant produit en générant le couple différentiel par les moteurs additionnels (140) et produisant ainsi des forces d'asservissement à cause des bras de levier (139).

15. Une méthode selon la revendication 14, caractérisée en ce qu'elle comprend également l'étape de produire un signal de sortie additionnel ($\mu$) pour actionner le moyen de verrouillage (160) entre une première position où le moyen de verrouillage (160) maintient la biellette additionnelle (120) dans une position substantiellement centrale, et une deuxième position où le moyen de verrouillage (160) n'empêche pas le mouvement de la biellette additionnelle (120).

16. Une méthode selon la revendication 15, caractérisée en ce qu'elle comprend également l'étape d'obtenir un quatrième signal ($\omega$) représentatif de la vitesse du véhicule, le signal de sortie additionnel ($\mu$) étant également dépendant du quatrième signal ($\omega$), le moyen de verrouillage (160) étant à la deuxième position lorsque la vitesse est inférieure à une valeur prédéterminée.

17. Une méthode pour produire un asservissement de servodirection pour un véhicule terrestre lent, le véhicule comprenant:

un volant de direction (10);
une biellette de direction (120);
deux roues (130) reliées au véhicule, chacune des roues (130) pouvant être orientée autour d'un axe d'orientation (132) et possédant un centre de traction (134) latéralement désaxé par rapport au point d'intersection (138) d'une prolongation virtuelle de l'axe d'orientation (132) avec le sol, un bras de levier virtuel (139) étant défini entre chacun des centres de traction (134) et de leur point d'intersection correspondant (138) de l'axe d'orientation (132) avec le sol;

une timonerie reliant mécaniquement la biellette (120) aux roues (130), la biellette (120) assurant que les roues (130) soient continuellement et substantiellement parallèles entre elles;

deux moteurs (140) mécaniquement indépendants et respectivement reliés à l'une des deux roues (130); et

un moyen de contrôle dont les signaux de sortie assurent la commande des moteurs (140);

un asservissement étant produit en générant une différence d'entraînement entre les moteurs (140) et produisant ainsi des forces d'asservissement à cause des bras de levier (139);

la méthode étant caractérisée en ce qu'elle comprend les étapes suivantes:

obtenir un premier signal ($\theta$) représentatif de la position du volant (10);

obtenir un deuxième signal ($\varepsilon$) représentatif de la position de la biellette (120); et

produire deux signaux de sortie ($+T_D'$, $-T_D'$) dépendant du premier ($\theta$) et du deuxième signal ($\varepsilon$), et représentatifs de la différence de couple à être générée par les moteurs (140);

un asservissement étant produit en générant le couple différentiel par les moteurs (140) et produisant ainsi des forces d'asservissement à cause des bras de levier (139).

**Claims**

1. A power-assisted steering system for a land vehicle, the said system comprising:

   a steering wheel (10);
   a connecting rod (20);
   two wheels (30) connected to the vehicle, each of the wheels (30) being orientable around a axis of orientation (32) and having a centre of traction (34) which is laterally offset in relation to the point of intersection (38) of a virtual extension of the axis of orientation (32) with the ground, a virtual lever arm (39) being defined between each of the centres of traction (34) and the corresponding point of intersection (38) of their axis of orientation (32) with the ground; a steering gear mechanically linking the connecting rod (20) to the wheels (30), the connecting rod (20) ensuring that the wheels (30) are continually and substantially parallel to each other;
   two mechanically independent motors (40) each respectively connected to one of the two wheels; and a means of control, the output signals of which control the motors (40);
   a steering assistance being produced by generation of a difference of drive between the motors (40), thus producing a steering assistance due to the lever arms (39);
   the power-assisted steering system being characterised in that it comprises:

   a steering box (16);
   a steering shaft (14) mechanically linking the steering wheel (10) to the connecting rod (20) the said box (16) in order to produce a substantially lateral movement of the connecting rod (20);
   a first means of detection to obtain a first signal ($\Delta T$) representative of the torque applied on the steering wheel (10) and its direction; and
   a means of control dependent on the first signal ($\Delta T$) to produce two output signals ($+T_D$, $-T_D$) representative of the difference in torque to be generated by the motors (40);

   a steering assistance being produced when torque is applied on the steering wheel (10), generating the differential torque by the motors (40) and thus producing steering assistance forces due to the lever arms (39).

2. A power-assisted steering system in accordance with claim 1, characterised in that it also comprises a second means of detection in order to produce a second signal ($\omega$) representative of the speed of the vehicle, the means of control being also dependent on the second signal ($\omega$) in order to produce the two output signals ($+T_D$, $-T_D$).

3. A power-assisted steering system in accordance with claim 1, characterised in that it also comprises an additional power-assisted steering system in order to orient two additional wheels (130) opposite the two wheels (30) of the power-assisted steering system, the two additional wheels (130) being connected to the vehicle and each being orientable around a axis of orientation (132) and having a centre of traction (134) laterally offset in relation to the point of intersection (138) of a virtual extension of their axis of orientation (132) with the ground, a virtual lever arm (139) being defined between each of the centres of traction (134) of the additional wheels (130) and the corresponding point of intersection (138) of their axis of orientation (132) with the ground, the additional power-assisted steering system comprising:

   an additional connecting rod (120);
   an additional steering gear mechanically linking the additional connecting rod (120) to the additional wheels (130), the additional connecting rod (120) ensuring that the additional wheels (130) are continually and substantially parallel to each other;

two additional mechanically independent motors (140), each respectively connected to one of the two additional wheels (130);

a second means of detection to obtain a second signal ($\theta$) representative of the position of the steering wheel (10);

a third means of detection to obtain a third signal ($\varepsilon$) representative of the position of the additional connecting rod (120); and

an additional means of control dependent on the second ($\theta$) and third signal ($\varepsilon$) to produce two additional output signals ($+T_D'$, $-T_D'$) representative of the difference of torque to be generated by the additional motors (140);

a steering assistance of the additional wheels (130) being produced by generation of the differential torque by the additional motors (140), thus producing steering assistance forces of the additional connecting rod (120) due to the lever arms (139) produced by the centres of traction (134) of the additional wheels (130).

4. A power-assisted steering system in accordance with claim 3, characterised in that it also comprises a means of locking (160) comprising a mobile part displaceable between a first position in which the means of locking (160) holds the additional connecting rod (120) in a substantially central position, and a second position in which the means of locking (160) does not prevent movement of the additional connecting rod (120), the additional means of control producing an additional output signal ($\mu$) to control the means of locking (160).

5. A power-assisted steering system in accordance with claim 3, characterised in that the said system also comprises a fourth means of detection in order to obtain a fourth signal ($\omega$) representative of the speed of the vehicle, the additional means of control also being dependent on the fourth signal ($\omega$) in order to produce the additional output signal ($\mu$), the means of locking (160) being in the second position when the speed is below a predetermined value.

6. A power-assisted steering system in accordance with claim 4, characterised in that the mobile part of the means of locking comprises a sliding bolt (162) capable of insertion into and withdrawal from a hole (161) provided in the additional connecting rod (120).

7. A power-assisted steering system in accordance with claim 1, characterised in that the wheels (30) are front wheels.

8. A power-assisted steering system in accordance with claim 3, characterised in that the additional wheels (130) are rear wheels.

9. A power-assisted steering system in accordance with claim 1, characterised in that each of the motors (40) together with its corresponding wheel (30) is a drive wheel.

10. A power-assisted steering system for a slow land vehicle, the said system comprising:

a steering wheel (10);
a connecting rod (120);
two wheels (130) connected to the vehicle, each of the said wheels (130) being orientable around a axis of orientation (132) and having a centre of traction (134) laterally offset in relation to the point of intersection (138) of a virtual extension of the axis of orientation (132) with the ground, a virtual lever arm (139) being defined between each of the centres of traction (134) and the corresponding point of intersection (138) of their axis of orientation (132) with the ground;
a steering gear mechanically linking the connecting rod (120) to the wheels (130), the steering rod (120) ensuring that the wheels (130) are continually and substantially parallel to each other;
two mechanically independent motors (140) each of which is respectively connected to one of the two wheels (130); and
a means of control, the output signals of which control the motors (140);

a steering assistance being produced by generation of a difference of drive between the motors (140), thus producing a steering assistance due to the lever arms (139) ; the power-assisted steering being characterised in that it comprises :

a first means of detection to obtain a first signal ($\theta$) representative of the position of the steering wheel (10);
a second means of detection to obtain a second signal ($\varepsilon$) representative of the position of the connecting rod (120); and
a means of control dependent on the first ($\theta$) and second signal ($\varepsilon$) to produce two output signals ($+T_D'$, $-T_D'$) representative of the difference of torque to be generated by the motors (140);
a steering assistance being produced by generation of the differential torque by the motors (140), thus producing steering assistance forces due to the lever arms (139).

11. A method of producing an automatic control of power-assisted steering for a land vehicle, the vehicle comprising:

a steering wheel (10);
a connecting rod (20);
a steering box (16);
a steering shaft (14) mechanically linking the steering wheel (10) to the steering box (16) in order to produce a substantially lateral movement of the connecting rod (20);
two wheels (30) connected to the vehicle, each of the wheels being orientable around a axis of orientation (32) and having a centre of traction (34) laterally offset in relation to the point of intersection (38) of a virtual extension of the axis of orientation (32) with the ground, a virtual lever arm (39) being defined between each of the centres of traction (34) and the corresponding point of intersection (38) of their axis of orientation (32) with the ground;
a steering gear mechanically linking the connecting rod (20) to the wheels (30), the connecting rod (20) ensuring that the wheels (30) are continually and substantially parallel to each other;
two mechanically independent motors each respectively connected to one of the two wheels (30); and
a means of control, the output signals of which control the motors (40);
a steering assistance being produced by generation of a difference of drive between the motors (40), thus producing steering assistance forces due to the lever arms (39) ; the method being characterised in that it comprises the following stages :

obtaining a first signal ($\Delta T$) representative of the torque applied on the steering wheel (10) and its direction; and
production of two output signals (+$T_D$, -$T_D$) dependent on the first signal ($\Delta T$) and representative of the difference of torque to be generated by the motors (40);

a steering assistance being produced when torque is applied on the steering wheel (10), by generation of the differential torque by the motors (40) and thus producing steering assistance forces of automatic control due to the lever arms (39).

12. A method in accordance with claim 11, characterised in that it also comprises the stage of obtaining a second signal ($\omega$) representative of the speed of the vehicle, both output signals (+$T_D$, -$T_D$) also being dependent on the second signal ($\omega$).

13. A method in accordance with claim 12, characterised in that it also comprises the stage of application of a gain (k) to the first signal ($\Delta T$) prior to production of the two output signals (+$T_D$, -$T_D$), the gain (k) being a function of the second signal ($\omega$).

14. A method in accordance with claim 11, characterised in that the vehicle also comprises two additional wheels (130) opposite the two wheels (30) of the power-assisted steering system, the two additional wheels (130) being connected to the vehicle and each being orientable around a axis of orientation (132) and having a centre of traction (134) laterally offset in relation to the point of intersection (138) of a virtual extension of their axis of orientation (132) on the ground, a virtual lever arm (139) being defined between each of the centres of traction (134) and the corresponding point of intersection (138) of their axis of orientation (132) with the ground, the additional power-assisted steering system comprising:

an additional connecting rod (120);
an additional steering gear mechanically linking the additional connecting rod (120) to the additional wheels (130), the additional connecting rod (120) ensuring that the additional wheels (130) are continually and substantially parallel to each other; two additional mechanically independent motors (140) each respectively connected to one of the two additional wheels (130);

the method comprising the following stages:

obtaining a second signal ($\theta$) representative of the position of the steering wheel (10);
obtaining a third signal ($\varepsilon$) representative of the position of the additional connecting rod (120); and production of two additional output signals (+$T_D$', -$T_D$') dependent on the second ($\theta$) and third ($\varepsilon$) signal, and representative of the difference of torque to be generated by the additional motors (140);
a steering assistance of the additional wheels (130) being produced by generation of a differential torque by the additional motors (140), thus producing steering assistance forces due to the lever arms (139).

15. A method in accordance with claim 14, characterised in that it also comprises the stage of production of an additional output signal ($\mu$) to activate the means of locking (160) between a first position in which the means of locking (160) holds the additional connecting rod (120) in a substantially central position and a second position in which the means of locking (160) does not prevent movement of the additional connecting rod (120).

16. A method in accordance with claim 15, characterised in that the said method also comprises the stage of obtaining a fourth signal (ω) representative of the speed of the vehicle, the additional output signal (μ) also being dependent on the fourth signal (ω), the means of locking (160) being in the second position when the speed is below a predetermined value.

17. A method of producing an automatic control of power-assisted steering for a slow land vehicle, the said vehicle comprising:

a steering wheel (10);
a steering connecting rod (120);
two wheels (130) connected to the vehicle, each of the said wheels (130) being orientable around a axis of orientation (132) and having a centre of traction (134) laterally offset in relation to the point of intersection (138) of a virtual extension of the axis of orientation (132) with the ground, a virtual lever arm (139) being defined between each of the centres of traction (134) and the corresponding point of intersection (138) of the axis of orientation (132) with the ground;
a steering gear mechanically linking the connecting rod (120) to the wheels (130), the connecting rod (120) ensuring that the wheels (130) are continually and substantially parallel to each other;
two mechanically independent motors (140) each connected respectively to one of the two wheels (130); and
a means of control, the output signals of which control the motors (140);
a steering assistance being produced by generation of a difference of drive between the motors (140), thus producing steering assistance forces due to the lever arms (139) ; (139); the method being characterised in that it comprises the following stages:

obtaining a first signal (θ) representative of the position of the steering wheel (10);
obtaining a second signal (ε) representative of the position of the connecting rod (120); and
production of two output signals (+$T_D$', -$T_D$') dependent on the first (θ) and second signals (ε) and representative of the difference of torque to be generated by the motors (140);
a steering assistance being produced by generation of the differential torque by the motors (140), thus producing steering assistance forces due to the lever arms (139).

**Patentansprüche**

1. Servolenkung für Landfahrzeuge, mit:

einem Lenkrad (10);

einer Spurstange (20);

zwei mit dem Fahrzeug verbundenen Rädern (30),
wobei jedes der Räder (30) um eine Lenkachse (32) gelenkt werden kann und einen Spurpunkt (34) hat, der seitlich in bezug auf den Schnittpunkt (38) einer gedachten Verlängerung der Lenkachse (32) mit dem Boden versetzt ist, wobei ein gedachter Hebelarm (39) zwischen jedem der Spurpunkte (34) und dem entsprechenden Schnittpunkt (38) der Lenkachse (32) des Rades mit dem Boden definiert wird;

einem Gestänge, das die Spurstange (20) mechanisch mit den Rädern (30) verbindet, wobei die Spurstange (20) sicherstellt, daß die Räder (30) ständig im wesentlichen parallel zueinander sind;

zwei Motoren (40), die mechanisch voneinander unabhängig sind und jeweils mit einem der Räder verbunden sind; und

einer Steuereinrichtung, deren Ausgangssignale die Motoren (40) steuern;
wobei eine Lenkwirkung erzeugt wird, indem eine Antriebsdifferenz zwischen den Motoren (40) erzeugt wird und so eine Lenkwirkung aufgrund der Hebelarme (39) hervorgerufen wird; dadurch gekennzeichnet, daß die Servolenkung aufweist:

ein Lenkgetriebe (16);

eine Lenkwelle (14), die das Lenkrad (10) über das Lenkgetriebe (16) mechanisch mit der Spurstange (20) verbindet, um eine im wesentlichen seitwärts gerichtete Bewegung der Spurstange (20) zu erzeugen;

einer ersten Sensoreinrichtung zur Erzeugung eines ersten Signals (ΔT), das für das auf das Lenkrad (10) ausgeübte Drehmoment und seine Richtung repräsentativ ist; und

eine von dem ersten Signal (ΔT) abhängige Steuereinrichtung zur Erzeugung von zwei Ausgangssignalen ($+T_D$,$-T_D$), die für die von den Motoren (40) zu erzeugende Drehmomentdifferenz repräsentativ sind; wobei, wenn ein Drehmoment auf das Lenkrad (10) ausgeübt wird, eine Lenkwirkung erzeugt wird, indem von den Motoren (40) das differentielle Drehmoment erzeugt wird und somit Hilfslenkkräfte durch die Hebelarme (39) bewirkt werden.

2. Servolenkung nach Anspruch 1, dadurch gekennzeichnet, daß sie auch eine zweite Sensoreinrichtung zur Erzeugung eines zweiten Signals ($\omega$) aufweist, das für die Geschwindigkeit des Fahrzeugs repräsentativ ist, wobei die Steuereinrichtung auch auf das zweite Signal ($\omega$) anspricht, um die beiden Ansgangssignale ($+T_D$, $-T_D$) zu erzeugen.

3. Servolenkung nach Anspruch 1, dadurch gekennzeichnet, daß sie auch eine zusätzliche Servolenkung zum Lenken von zwei weiteren, den beiden Rädern (30) der Servolenkung entgegengesetzten Rädern (130) aufweist, wobei die beiden weiteren Räder (130) mit dem Fahrzeug verbunden sind und jedes von ihnen um eine Lenkachse (132) lenkbar ist und einen Spurpunkt (134) hat, der in bezug auf den Schnittpunkt (138) einer gedachten Verlängerung seiner Lenkachse (132) mit dem Boden seitlich versetzt ist, wobei ein gedachter Hebelarm (139) zwischen jedem der Spurpunkte (134) der weiteren Räder (130) und dem entsprechenden Schnittpunkt (138) ihrer Lenkachse (132) mit dem Boden definiert wird, wobei die zusätzliche Servolenkung aufweist:

eine weitere Spurstange (120);

ein weiteres Gestänge, das die weitere Spurstange (120) mechanisch mit den weiteren Rädern (130) verbindet, wobei die weitere Spurstange (120) sicherstellt, daß die weiteren Räder (130) ständig im wesentlichen parallel zueinander sind;

zwei weitere Motoren (140), die mechanisch voneinander unabhängig sind und jeweils mit einem der weiteren Räder (130) verbunden sind;

eine zweite Sensoreinrichtung zur Erzeugung eines zweiten Signals ($\theta$), das für die Position des Lenkrades (10) repräsentativ ist;

eine dritte Sensoreinrichtung zur Erzeugung eines dritten Signals ($\epsilon$), das für die Position der weiteren Spurstange (120) repräsentativ ist; und

eine weitere Steuereinrichtung, die auf das zweite ($\theta$) und das dritte Signal ($\epsilon$) anspricht, um zwei weitere Ansgangssignale ($+T_D'$, $-T_D'$) zu erzeugen, die für die von den weiteren Motoren (140) zu erzeugende Drehmomentdifferenz repräsentativ sind; wobei eine Lenkwirkung für die weiteren Räder (130) erzeugt wird, indem von den weiteren Motoren (140) das differentielle Drehmoment erzeugt wird und so Hilfslenkkräfte für die weitere Spurstange (120) aufgrund der Hebelarme (139) hervorgerufen werden, die durch die Spurpunkte (134) der weiteren Räder (130) gebildet werden.

4. Servolenkung nach Anspruch 3, dadurch gekennzeichnet, daß sie auch eine Verriegelungseinrichtung (160) aufweist, mit einem beweglichen Teil, das zwischen einer ersten Position, in der die Verriegelungseinrichtung (160) die weitere Spurstange (120) in einer im wesentlichen zentralen Position hält, und einer zweiten Position verstellbar ist, in der die Verriegelungseinrichtung (160) die Bewegung der weiteren Spurstange (120) nicht verhindert, wobei die weitere Steuereinrichtung ein zusätzliches Ansgangssignal ($\mu$) zur Steuerung der Verriegelungseinrichtung (160) erzeugt.

5. Servolenkung nach Anspruch 3, dadurch gekennzeichnet, daß sie auch eine vierte Sensoreinrichtung zur Erzeugung eines vierten Signals ($\omega$) aufweist, das für die Geschwindigkeit des Fahrzeugs repräsentativ ist, wobei die weitere Steuereinrichtung auch auf das vierte Signal ($\omega$) anspricht, um das zusätzliche Ansgangssignal ($\mu$) zu erzeugen, wobei die Verriegelungseinrichtung (160) sich in der zweiten Position befindet, wenn die Geschwindigkeit kleiner als ein vorgegebener Wert ist.

6. Servolenkung nach Anspruch 4, dadurch gekennzeichnet, daß der bewegliche Teil der Verriegelungseinrichtung einen Riegel (162) aufweist, der in ein in der weiteren Spurstange (120) ausgebildetes Loch (161) eingeführt und aus diesem herausgezogen werden kann.

7. Servolenkung nach Anspruch 1, dadurch gekennzeichnet, daß die Räder (30) die Vorderräder sind.

8. Servolenkung nach Anspruch 3, dadurch gekennzeichnet, daß die weiteren Räder (130) die Hinterräder sind.

9. Servolenkung nach Anspruch 1, dadurch gekennzeichnet, daß jeder der Motoren (40) mit dem zuge-

höhrigen Rad (30) eine integrierte Motor-Rad-Einheit bildet.

10. Servolenkung für langsame Landfahrzeuge, mit:

einem Lenkrad (10);

einer Spurstange (120);

zwei mit dem Fahrzeug verbundenen Rädern (130), von denen jedes um eine Lenkachse (132) gelenkt werden kann und einen Spurpunkt (134) aufweist, der in bezug auf den Schnittpunkt (138) einer gedachten Verlängerung der Lenkachse (132) mit dem Boden seitlich versetzt ist, wobei ein gedachter Hebelarm (139) zwischen Jedem der Spurpunkte (134) und dem entsprechenden Schnittpunkt (138) der Lenkachse (132) mit dem Boden definiert wird;

einem Gestänge, das die Spurstange (120) mechanisch mit den Rädern (130) verbindet, wobei die Spurstange (120) sicherstellt, daß die Räder (130) ständig im wesentlichen parallel zueinander sind;

zwei Motoren (140), die mechanisch voneinander unabhängig sind und jeweils mit einem der beiden Räder (130) verbunden sind; und

einer Steuereinrichtung, deren Ausgangssignale die Motoren (140) steuern; wobei eine Lenkwirkung erzeugt wird, indem eine Antriebsdifferenz zwischen den Motoren (140) erzeugt wird und so eine Lenkwirkung aufgrund der Hebelanne (139) hervorgerufen wird; wobei die Servolenkung dadurch gekennzeichnet ist, daß sie aufweist:

eine erste Sensoreinrichtung zur Erzeugung eines ersten Signals ($\theta$), das für die Position des Lenkrads (10) repräsentativ ist;

eine zweite Sensoreinrichtung zur Erzeugung eines zweiten Signals ($\varepsilon$), das für die Position der Spurstange (120) repräsentativ ist; und

eine auf das erste ($\theta$) und das zweite Signal ($\varepsilon$) ansprechende Steuereinrichtung zur Erzeugung von zwei Ausgangssignalen (+$T_D$', -$T_D$'), die für die von den Motoren (140) zu erzeugende Drehmomentdifferenz repräsentativ sind; wobei eine Lenkwirkung erzeugt wird, indem von den Motoren (140) das differentielle Drehmoment erzeugt wird und somit Hilfslenkkräfte durch die Hebelarme (139) hervorgerufen werden.

11. Verfahren zur Erzeugung einer Hilfslenkwirkung für ein Landfahrzeug, das aufweist:

ein Lenkrad (10);

eine Spurstange (20);

ein Lenkgetriebe (16);

eine Lenkwelle (14), die das Lenkrad (10) mechanisch mit dem Getriebe (16) verbindet, um eine im wesentlichen seitwärts gerichtete Bewegung der Spurstange (20) zu erzeugen;

zwei mit dem Fahrzeug verbundene Räder (30), die Jeweils um eine Lenkachse (32) gelenkt werden können und einen Spurpunkt (34) aufweisen, der in bezug auf den Schnittpunkt (38) einer gedachten Verlängerung der Lenkachse (32) mit dem Boden seitlich versetzt ist, wobei ein gedachter Hebelarm (39) zwischen jedem Spurpunkt (34) und dem entsprechenden Schnittpunkt (38) der Lenkachse (32) mit dem Boden definiert wird;

ein Gestänge, das die Spurstange (20) mechanisch mit den Rädern (30) verbindet, wobei die Spurstange (20) sicherstellt, daß die Räder (30) ständig im wesentlichen parallel zueinander sind;

zwei Motoren (40), die mechanisch voneinander unabhängig sind und die jeweils mit den beiden Rädern (30) verbunden sind; und

einer Steuereinrichtung, deren Ansgangssignale die Motoren (40) steuern; wobei eine Lenkwirkung erzeugt wird, indem eine Antriebsdifferenz zwischen den Motoren (40) erzeugt wird und somit Hilfslenkkräfte aufgrund der Hebelarme (39) hervorgerufen werden; welches Verfahren dadurch gekennzeichnet ist, daß es die folgenden Schritte aufweist:

Erzeugen eines ersten Signals ($\Delta T$), das für das auf das Lenkrad (10) wirkende Drehmoment und seine Richtung repräsentativ ist; und

Erzeugen von zwei Ausgangssignalen (+$T_D$, -$T_D$), die von dem ersten Signal ($\Delta T$) abhängig sind und für die von den Motoren (40) zu erzeugende Drehmomentdifferenz repräsentativ sind;

wobei, wenn ein Drehmoment auf das Lenkrad (10) ausgeübt wird, eine Lenkwirkung erzeugt wird, indem von den Motoren (40) das differentielle Drehmoment erzeugt wird und somit Hilfslenkkräfte aufgrund der Hebelarme (39) hervorgerufen werden.

12. Verfahren nach Anspruch 11, dadurch gekennzeichnet, daß es auch den Schritt der Erzeugung eines zweiten Signals (ω) aufweist, das für die Geschwindigkeit des Fahrzeugs repräsentativ ist, wobei die beiden Ausgangssignale (+T$_D$, -T$_D$) auch von dem zweiten Signal (ω) abhängig sind.

13. Verfahren nach Anspruch 12, dadurch gekennzeichnet, daß es auch den Schritt der Anwendung einer Verstärkung (k) auf das erste Signal (ΔT) aufweist, bevor die beiden Ausgangssignale (+T$_D$, -T$_D$) erzeugt werden, wobei die Verstärkung (k) eine Funktion des zweiten Signals (ω) ist.

14. Verfahren nach Anspruch 11, dadurch gekennzeichnet, daß das Fahrzeug auch zwei weitere, den beiden Rädern (30) der Servolenkung entgegengesetzte Räder (130) aufweist, die mit dem Fahrzeug verbunden sind und von denen jedes um eine Lenkachse (132) lenkbar ist und einen Spurpunkt (134) hat, der in bezug auf den Schnittpunkt (138) einer gedachten Verlängerung seiner Lenkachse (132) mit dem Boden seitlich versetzt ist, wobei ein gedachter Hebelarm (139) zwischen jedem Spurpunkt (134) und dem entsprechenden Schnittpunkt (138) der Lenkachse (132) mit dem Boden definiert wird, wobei die zusätzliche Servolenkung aufweist:

eine weitere Spurstange (120);

ein weiteres Gestänge, das die weitere Spurstange (120) mechanisch mit den weiteren Rädern (130) verbindet, wobei die weitere Spurstange (120) sicherstellt, daß die weiteren Räder (130) ständig im wesentlichen parallel zueinander sind;

zwei weitere Motoren (140), die mechanisch voneinander unabhängig sind und jeweils mit den beiden weiteren Rädern (130) verbunden sind;

welches Verfahren die folgenden Schritte aufweist:

Erzeugen eines zweiten Signals (θ), das für die Position des Lenkrades (10) repräsentativ ist;

Erzeugen eines dritten Signals (ε), das für die Position der weiteren Spurstange (120) repräsentativ ist; und

Erzeugen von zwei weiteren Ausgangssignalen (+T$_D$', -T$_D$'), die von dem zweiten Signal (θ) und dem dritten Signal (ε) abhängig sind und für die von den weiteren Motoren (140) zu erzeugende Drehmomentdifferenz repräsentativ sind;

wobei eine Lenkwirkung für die weiteren Räder (130) erzeugt wird, indem von den weiteren Motoren (140) das differentielle Drehmoment erzeugt wird und somit Hilfslenkkräfte aufgrund der Hebelarme (139) hervorgehoben werden.

15. Verfahren nach Anspruch 14, dadurch gekennzeichnet, daß es auch den Schritt der Erzeugung eines weiteren Ausgangssignals (μ) aufweist, zur Betätigung der Verriegelungseinrichtung (160) zwischen einer ersten Position, in der die Verriegelungseinrichtung (160) die weitere Spurstange (120) in einer im wesentlichen zentralen Position hält, und einer zweiten Position, in der die Verriegelungseinrichtung (160) die Bewegung der weiteren Spurstange (120) nicht verhindert.

16. Verfahren nach Anspruch 15, dadurch gekennzeichnet, daß es auch den Schritt der Erzeugung eines vierten Signals (ω) aufweist, das für die Geschwindigkeit des Fahrzeugs repräsentativ ist, wobei das weitere Ausgangssignal (μ) auch von dem vierten Signal (ω) abhängig ist und die Verriegelungseinrichtung (160) sich in der zweiten Position befindet, wenn die Geschwindigkeit kleiner als ein vorgegebener Wert ist.

17. Verfahren zur Erzeugung einer Hilfslenkwirkung für ein langsames Landfahrzeug, welches Fahrzeug aufweist:

ein Lenkrad (10);

eine Spurstange (120);

zwei mit dem Fahrzeug verbundene Räder (130), deren jedes um eine Lenkachse (132) gelenkt werden kann und einen Spurpunkt (134) hat, der in bezug auf den Schnittpunkt (138) einer gedachten Verlängerung der Lenkachse (132) mit dem Boden seitlich versetzt ist, wobei ein gedachter Hebelarm (139) zwischen jedem der Spurpunkte (134) und dem entsprechenden Schnittpunkt (138) der Lenkachse (132) mit dem Boden definiert wird;

einem Gestänge, das die Spurstange (120) mechanisch mit den Rädern (130) verbindet, wobei die Spurstange (120) sicherstellt, daß die Räder (130) ständig im wesentlichen parallel zueinander sind;

zwei Motoren (140), die mechanisch voneinander unabhängig sind und jeweils mit einem der beiden Räder (130) verbunden sind; und

einer Steuereinrichtung, deren Ausgangssignale die Motoren (140) steuern;
wobei eine Lenkwirkung erzeugt wird, indem eine Antriebsdifferenz zwischen den Motoren (140) erzeugt wird und somit Hilfslenkkräfte aufgrund der Hebelarme (139) hervorgerufen werden;
welches Verfahren dadurch gekennzeichnet ist, daß es die folgenden Schritte aufweist:

Erzeugen eines ersten Signals ($\theta$), das für die Position des Lenkrades (10) repräsentativ ist;

Erzeugen eines zweiten Signals ($\varepsilon$), das für die Position der Spurstange (120) repräsentativ ist; und

Erzeugen von zwei Ausgangssignalen ($+T_D'$, $-T_D'$), die von dem ersten Signal ($\theta$) und dem zweiten Signal ($\varepsilon$) abhängig sind und die für die von den Motoren (140) zu erzeugende Drehmomentdifferenz repräsentativ sind;
wobei eine Lenkwirkung erzeugt wird, indem von den Motoren (140) das differentieile Drehmoment erzeugt wird und so Hilfslenkkräfte aufgrund der Hebelarme (139) hervorgerufen werden.

FIG.1

10

30

22    20    16    50    14    22    30

Tp    52    Tp

24    ÉNERGIE    ÉNERGIE    24

54    54

56    w    56    32

40    40    31

31    38

32    34

30

EP 0 686 111 B1

$FIG.\ 2$

EP 0 686 111 B1

FIG. 3

130

ÉNERGIE

124

TP

ÉNERGIE

180

10

130

124

156

154

152

154

156

14

122

120

140

182

160

132

140

132

138

134

EP 0 686 111 B1

# F I G. 4

# FIG. 5

FIG. 6

ADDITIONNEUR

54

56

MOTEUR DROIT

$T_P$

$T_{RR}$

CONVERTISSEUR

40

52

ORDINATEUR

$+T_D$

20'

50

14'

$\Delta T$

$T_N$

w

k

53

REGULATEUR

$-T_D$

ADDITIONNEUR

54

56

MOTEUR GAUCHE

$T_P$

$T_{RL}$

CONVERTISSEUR

40

16'

CONVERTISSEUR

FIG. 7

k

w

EP 0 686 111 B1

## FIG. 8